# EUROPEAN PATENT APPLICATION

(11) **EP 2 025 771 A1**
(43) Date of publication of application: **18.02.2009**
(21) Application number: 07016018.9
(22) Date of filing: 15.08.2007
(51) Int. Cl.: C23C 2/26, C23C 2/06, C23C 2/12

(54) **Method for producing a coated steel strip for producing taylored blanks suitable for thermomechanical shaping, strip thus produced, and use of such a coated strip**

(71) Applicant: Corus Staal BV, 1970 CA Ijmuiden (NL)
(72) Inventor: Van Tol, Ron, 2694 BZ 's Gravenzande (NL); Verloop, Willem Cornelis, 2135 JZ Hoofdorp (NL)
(74) Representative: Kruit, Jan

(57) **Abstract**

The invention relates to a method for producing a coated steel strip for producing tailored blanks suitable for thermomechanical shaping.

According to the invention, the method comprises the following steps:
• providing a hot-rolled steel strip;
• coating the strip with a metallic coating;
• cold rolling the strip such that the strip obtains a variable thickness in its length direction, having at least thicker sections and thinner sections.

The invention also relates to a steel strip thus produced and the use of such a steel strip.

## Description

The invention relates to a method for producing a coated steel strip for producing tailored blanks suitable for thermomechanical shaping. The invention also relates to the use of such a coated strip for manufacturing a product with high mechanical properties.

It is known in the art to form steel products by thermomechanical shaping of a blank, for instance by first hot drawing a blank into a product and than rapidly cooling the product. In that way, a product is obtained having high mechanical properties due to the rapid cooling. To prevent oxidation of the product during the hot drawing, the blank has been covered by a metallic coating such as aluminium or zinc. Usually the sheets are cut from a steel strip, which has been hot dip coated with a metallic coating.

Such products are often used in the automotive industry, in which there is a tendency to use lighter products having better mechanical properties, so-called 'tailored products'. It has been proposed to use the so-called tailor welded blank (TWB) for the thermomechanical shaping as discussed above. A TWB consists of two or more blanks that have been welded into one blank, in which the two or more blanks have different properties, for instance a different composition and/or a different thickness.

It has been found, however, that the use of coated TWBs for hot drawing is problematic. The blanks of which a TWB has been produced are of course coated with a metallic coating, but due to the welding of these blanks to form a TWB the edges of both or all blanks are affected and, moreover, the welded seams of the TWB do not possess a coating, which may cause problems during hot forming, for instance oxidation.

It is an object of the present invention to provide a method to produce a coated strip from which tailored products can be made, using hot forming of tailored blanks.

It is another object of the present invention to provide a coated strip from which tailored products can be made, using hot forming of tailored blanks.

It is still another object of the present invention to use the coated strip thus provided for manufacturing a tailored product with high mechanical properties.

According to the invention one or more of these objects can be reached by using a method for producing a coated steel strip for producing tailored blanks suitable for thermomechanical shaping comprising the following steps:
- providing a hot-rolled steel strip;
- coating the strip with a metallic coating;
- cold rolling the strip such that the strip obtains a variable thickness in its length direction, having at least thicker sections and thinner sections.

By using this method a strip having a variable thickness has been provided with a coating over its full length, and from this strip tailored blanks can be cut, so-called tailor rolled blanks (TRBs). Such TRBs have at least one thicker section and one thinner section, with a section between each thicker and thinner section that gradually changes in thickness from the thicker section to the thinner section. The method according to the invention has the great advantage that the TRBs produced from the strip are coated over their full surface with the metallic coating since no welds are present, and thus such TRBs are directly suitable for hot forming, such as hot drawing of a product.

According to a preferred embodiment the cold rolling is performed such that the thicker sections obtain a thickness reduction of less than 15% and the thinner sections obtain a thickness reduction of more than 15%. In this way, the thinner sections will recrystallise further during the hot forming of the product, and the thicker sections will recrystallise less. Thus, the mechanical properties of the thinner sections can be varied as compared to the mechanical properties of the thicker sections.

It is possible to cold-roll the hot-rolled steel strip before the strip is provided with a variable thickness. In this way, a hot-rolled steel can be provided with the desired starting thickness for the cold-rolling to provide the strip with the variable thickness. Usually this will result in a strip that will recrystallise in full during the hot forming of the product.

According to a preferred embodiment the metallic coating is provided by hot dip coating using a bath of aluminium or an aluminium alloy, preferably an aluminium alloy consisting of 2 - 4 wt% iron and optionally 8 - 12 wt% silicon, the remainder being aluminium and unavoidable impurities, more preferably an aluminium alloy consisting of 2 - 3,5 wt% iron and 9 - 10 wt% silicon, the remainder being aluminium and unavoidable impurities. In this way a suitable coating based on aluminium is provided on the strip for the hot forming of the products produced from the strip.

According to another preferred embodiment the metallic coating is provided by hot dip coating using a bath of zinc or a zinc alloy, preferably a zinc alloy consisting of 0.3 - 4.0 wt% magnesium and 0.05 - 6.0 wt% aluminium, optionally at most 0.2 wt% of one or more additional elements, the remainder being zinc and unavoidable impurities. In this way a suitable coating based on zinc is provided on the strip for the hot forming of the products produced from the strip. Preferably, the zinc alloy consists of 0.3 - 2.3 wt% Mg and 0.6 - 2.3 wt% Al, the remainder being zinc and unavoidable impurities, or 1.6 - 2.3 wt% Mg and 1.6 - 2.3 wt% Al, the remainder being zinc and unavoidable impurities. It has been found that these compositions provide a very good protection at lower than usual thicknesses.

Preferably the steel strip has the following composition in wt%: 0.15 < C < 0.5, 0.5 < Mn < 3.0, 0.1 < Si < 0.5, 0.01 < Cr < 1.0, Ti < 0.2, Al < 0.1, P < 0.1, Nb < 0.1, N < 0.01, S < 0.05, 0.0005 < B < 0.015, unavoidable impurities, the remainder being Fe. With this composition a steel strip has been provided that is very suitable to hot form the tailor rolled blanks cut from this steel strip.

More preferably, the steel strip has the composition in wt%: 0.15 < C < 0.40, 0.8 < Mn < 1.5, 0.1 < Si < 0.35, 0.01 < Cr < 1.0, Ti < 0.1, Al < 0.1, P < 0.05, Nb < 0.05, N < 0.01, S < 0.03, 0.0005 < B < 0.010, unavoidable impurities, the remainder being Fe. This composition provides a steel strip that is even better for hot forming of the tailor rolled blanks produced from this steel strip.

Most preferably, the steel strip has the composition in wt%: 0.15 < C < 0.25, 01.0 < Mn < 1.5, 0.1 < Si < 0.35, 0.01 < Cr < 0.8, preferably 0.1 < Cr < 0.4, 0.01 < Ti < 0.07, Al < 0.1, P < 0.05, Nb < 0.05, preferably Nb < 0.03, N < 0.01, S < 0.03, 0.001 < B < 0.008, unavoidable impurities, the remainder being Fe. The steel strip with this composition provides the best tailor rolled blanks for hot forming.

For the steel compositions as described above it is recommended that 0 < Ti - 3.4*N, preferably 0 < Ti - 3.4*N < 0.05 wt%, more preferably 0 < Ti - 3.4*N < 0.02 wt%. In this way enough titanium is present to stoichiometrically bind the nitrogen. Preferably not much more titanium is present, as indicated by the equations, since the excess titanium may react with carbon to form titaniumcarbide particles, which are hard and thus undesirable because they may damage the forming tools or cause excessive wear.

According to a possible embodiment the steel strip is coated with the metallic coating after the strip is cold rolled to obtain a variable thickness. In this way, the steel strip can be coated after the thicker and thinner sections are formed. However, the coating of a strip having a variable thickness is less easy, since it is more difficult to provide a coating with a specific thickness.

Preferably the strip is coated with a metallic coating having a thickness between 1 and 50 µm, preferably a thickness between 1 and 20 µm for a zinc or zinc alloy coating and preferably a thickness between 5 and 30 µm for an aluminium or aluminium alloy coating. These coating thicknesses have been found to provide a sufficient protection to the product during the lifetime of the product, and also provide enough protection during the hot forming of the products.

According to a second aspect of the invention there has been provided a strip produced in accordance with the method as described above, the strip having a width between 200 and 2000 mm, a thickness between 0.5 and 10 mm, and a length between 100 and 2000 m. Preferably, the thicknesses of the strip having a variable thickness are between 1 and 4 mm.

According to a third aspect, the invention also relates to the use of the steel strip provided in accordance with the method as described above for manufacturing a product with high mechanical properties, comprising the following steps:
- cutting the steel strip to obtain a blank having at least a thicker and a thinner section;
- heating the blank to a temperature above the Ac1 temperature so as to at least partially bring the blank in the austenite phase;
- shaping the blank to obtain the product;
- cooling the product rapidly, preferably at a cooling rate higher than the critical cooling rate, to impart the product with high mechanical properties.
This is the use that the producer of hot formed products can make of the steel strip as provided by the method according to the invention. To provide the high mechanical properties, the blank has to be heated to a temperature that is high enough that the steel of the blank will at least partially transform into the austenitic phase, and after hot forming the product has to be cooled fast enough.

Alternatively, the steel strip provided in accordance with the method as described above is used for manufacturing a product with high mechanical properties, comprising the following steps:
- cutting the steel strip to obtain a blank having at least a thicker and a thinner section;
- shaping the blank to obtain a precursor product;
- heating the precursor product to a temperature above the Ac1 temperature so as to at least partially bring the blank in the austenite phase;
- shaping the precursor product to obtain the product;
- cooling the product rapidly, preferably at a cooling rate higher than the critical cooling rate, to impart the product with high mechanical properties.
This is another way of using the steel strip as provided by the method according to the invention by the producer of hot formed products, in which an additional step is provided by which the blank is cold formed to obtain a precursor product. This precursor product is heated to a temperature above the Ac1 temperature, after which it is hot formed and rapidly cooled.

Preferably, the blank or precursor product is heated to a temperature above 950 °C. In this way one can be sure that the blank or precursor product will be transformed into the austenitic phase.

According to a preferred embodiment, excess material of the blank is removed by cutting after the shaping of the product. It is advisable to cut off excess material before the formed product is rapidly cooled, because due to the cooling the steel will harden, but it will often be necessary to cut off the excess material after cooling of the product.

The invention will be elucidated with the following examples.

According to a first example the starting point is a hot rolled steel strip having a width of 430 mm, a thickness of 3.0 mm and a length of for instance 700 m. The composition of the steel strip is 0.226 wt% C, 1.17 wt% Mn, 0.263 wt% Si, 0.002 wt% S, 0.013 wt% P, 0.188 wt% Cr, 0.0026 wt% B, 0.034 wt% Ti, <0.001 wt% Nb, 0.049 wt% Al, and 0.0040 wt% N. This steel type has a Rm value of at least 550 Mpa.

This steel strip is than aluminised by hot dip coating in an aluminium bath having a composition of 9.4 wt% silicon, 3.0 wt% iron, the remainder being aluminium with unavoidable impurities. The coating is applied in the usual way; the thickness of the coating thus applied is approximately 25 µm.

After the coating of the strip the strip is cold rolled to provide the strip with a variable thickness, having thicker portions, thinner portions and transitional portions between the thicker and thinner portions. The thicker portions are provided with a thickness of 1.8 mm and the thinner portions are provided with a thickness of 1.2 mm. The thicker portions have a length of alternately 200 mm and 340 mm; the thinner portions have a length of alternately 115 mm and 200 mm. The transitional portions have a length of 60 mm.

The coated strip having a variable thickness then is cut in tailor rolled blanks having a length of 1095 mm. These TRBs can for example be used to produce inner parts of a body in white.

These TRBs can be shaped thermomechanically in the following way. The TRB is heated to a temperature above the Ac1 temperature at a velocity of at least 5 °C/s, so above the transition temperature of the steel from ferrite into austenite. In practice, a temperature of 950 °C is chosen. The TRB is then shaped in the desired form by for instance hot deep drawing. To provide the formed TRB with the desired properties, the hot formed TRB is quenched at a cooling velocity above the critical velocity, for instance a velocity of 30 °C/s. Due to the fast quenching, the structure of the steel is at least partially martensitic. The Rm value is approximately 1500 MPa, the elongation Ag is still 5 to 6 %.

According to a second example the starting point is a hot rolled steel strip having a width of 620 mm, a thickness of 4.0 mm and a length of for instance 400 m. The composition of the steel strip is 0.223 wt% C, 1.18 wt% Mn, 0.24 wt% Si, 0.004 wt% S, 0.012 wt% P, 0.212 wt% Cr, 0.0032 wt% B, 0.033 wt% Ti, <0.001 wt% Nb, 0.038 wt% Al, and 0.0038 wt% N. This steel type has a Rm value of at least 460 Mpa.

This steel strip is provided with a zinc layer by hot dip coating in a zinc bath having a composition of 1.8 wt% magnesium, 1.8 wt% aluminium, the remainder being zinc with unavoidable impurities. The coating is applied in the usual way; the thickness of the coating thus applied is approximately 12 µm.

After the coating of the strip the strip is cold rolled to provide the strip with a variable thickness, having thicker portions, thinner portions and transitional portions between the thicker and thinner portions. The thicker portions are provided with a thickness of 2.2 mm and the thinner portions are provided with a thickness of 1.5 mm. The thicker portions have a length of 280 mm; the thinner portions have a length of 200 mm. The transitional portions have a length of 60 mm.

The coated strip having a variable thickness then is cut in tailor rolled blanks having a length of for instance 600 mm. These TRBs can for example be used to produce inner parts for a body in white for the automotive industry.

These TRBs can be shaped in the following way. The TRB is first shaped to obtain a precursor product by for instance deep drawing, that is a product that already has roughly the desired final shape. Then, the precursor product is heated to a temperature above the Ac1 temperature at a velocity of at least 5 °C/s, so above the transition temperature of the steel from ferrite into austenite. In practice, a temperature of 950 °C is chosen. The TRB is then shaped in the desired final form by for instance hot deep drawing. To provide the formed TRB with the desired properties, the hot formed TRB is quenched at a cooling velocity above the critical velocity, for instance a velocity of 30 °C/s. Due to the fast quenching, the structure of the steel is at least partially martensitic. The Rm value is approximately 1450 MPa, the elongation Ag is still 7 to 9 %.

It will be clear to the person skilled in the art that the examples are also viable for other steel types, for other hot rolled strip dimensions, for strips having been provides with otherwise shaped thicker and thinner portions, and for other coatings. The scope of the invention is determined by the accompanying claims.

## Claims

1. Method for producing a coated steel strip for producing tailored blanks suitable for thermomechanical shaping comprising the following steps:
• providing a hot-rolled steel strip;
• coating the strip with a metallic coating;
• cold rolling the strip such that the strip obtains a variable thickness in its length direction, having at least thicker sections and thinner sections.

2. Method according to claim 1, whererin the cold rolling is performed such that the thicker sections obtain a thickness reduction of less than 15% and the thinner sections obtain a thickness reduction of more than 15%.

3. Method according to claim 1 or 2, wherein the hot-rolled steel strip is cold-rolled before the strip is provided with a variable thickness.

4. Method according to claim 1, 2 or 3, wherein the metallic coating is provided by hot dip coating using a bath of aluminium or an aluminium alloy, preferably an aluminium alloy consisting of 2 - 4 wt% iron and optionally 8 - 12 wt% silicon, the remainder being aluminium and unavoidable impurities, more preferably an aluminium alloy consisting of 2 - 3.5 wt% iron and 9 - 10 wt% silicon, the remainder being aluminium and unavoidable impurities.

5. Method according to claim 1, 2 or 3, wherein the metallic coating is provided by hot dip coating using a bath of zinc or a zinc alloy, preferably a zinc alloy consisting of 0.3 - 4.0 wt% magnesium and 0.05 - 6.0 wt% aluminium, optionally at most 0.2 wt% of one or more additional elements, the remainder being zinc and unavoidable impurities.

6. Method according to any one of the claims 1 - 5, wherein the steel strip has the composition in wt%:
0.15 < C < 0.5
0.5 < Mn < 3.0
0.1 < Si < 0.5
0.01 < Cr < 1.0
Ti < 0.2
Al < 0.1
P < 0.1
Nb < 0.1
N < 0.01
S < 0.05
0.0005 < B < 0.015
unavoidable impurities
the remainder being Fe.

7. Method according to claim 6, wherein the steel strip has the composition in wt%:
0.15 < C < 0.40
0.8 < Mn < 1.5
0.1 < Si < 0.35
0.01 < Cr < 1.0
Ti < 0.1
Al < 0.1
P < 0.05
Nb < 0.05
N < 0.01
S < 0.03
0.0005 < B < 0.010
unavoidable impurities
the remainder being Fe.

8. Method according to claim 7, wherein the steel strip has the composition in wt%:
0.15 < C < 0.25
01.0 < Mn < 1.5
0.1 < Si < 0.35
0.01 < Cr < 0.8, preferably 0.1 < Cr < 0.4
0.01 < Ti < 0.07
Al < 0.1
P < 0.05
Nb < 0.05, preferably Nb < 0.03
N < 0.01
S < 0.03
0.0015 < B < 0.008
unavoidable impurities
the remainder being Fe.

9. Method according to any one of the claims 6, 7 or 8, wherein 0 < Ti - 3.4*N, preferably 0 < Ti - 3.4*N < 0.05 wt%, more preferably 0 < Ti - 3.4*N < 0.02 wt%.

10. Method according to any one of the preceding claims, wherein the steel strip is coated with the metallic coating after the strip is cold rolled to obtain a variable thickness.

11. Method according to any one of the preceding claims, wherein the strip is coated with a metal coating the strip with a metallic coating lic coating having a thickness between 1 and 50 µm, preferably a thickness between 1 and 20 µm for a zinc or zinc alloy coating and preferably a thickness between 5 and 30 µm for an aluminium or aluminium alloy coating.

12. Strip produced in accordance with the method of any one of the preceding claims, the strip having a width between 200 and 2000 mm, a thickness between 1 and 5 mm, and a length between 100 and 2000 m.

13. Use of the steel strip provided in accordance with the method of any one of the preceding claims 1 - 11 for manufacturing a product with high mechanical properties, comprising the following steps:
• cutting the steel strip to obtain a blank having at least a thicker and a thinner section;
• heating the blank to a temperature above the Ac1 temperature so as to at least partially bring the blank in the austenite phase;
• shaping the blank to obtain the product;
• cooling the product rapidly, preferably at a cooling rate higher than the critical cooling rate, to impart the product with high mechanical properties.

14. Use of the steel strip provided in accordance with the method of any one of the preceding claims 1 - 11 for manufacturing a product with high mechanical properties, comprising the following steps:
• cutting the steel strip to obtain a blank having at least a thicker and a thinner section;
• shaping the blank to obtain a precursor product;
• heating the precursor product to a temperature above the Ac1 temperature so as to at least partially bring the blank in the austenite phase;
• shaping the precursor product to obtain the product;
• cooling the product rapidly, preferably at a cooling rate higher than the critical cooling rate, to impart the product with high mechanical properties.

15. Use of the steel strip according to claim 13 or 14, wherein the blank or precursor product is heated to a temperature above 950 ° C.

16. Use of the steel strip according to claim 13, 14 or 15, wherein excess material of the blank is removed by cutting after the shaping of the product.
